# EUROPÄISCHE PATENTANMELDUNG

(11) **EP 1 184 925 A2**
(43) Veröffentlichungstag der Anmeldung: **06.03.2002**
(21) Anmeldenummer: 01119314.1
(22) Anmeldetag: 10.08.2001
(51) Int. Cl.: H01M 8/10, H01M 8/24, H01M 8/02

(54) **PEM-Brennstoffzellenstapel**

(30) Priorität: 31.08.2000 DE 10042744
(71) Anmelder: dmc2 Degussa Metals Catalysts Cerdec AG, 63457 Hanau (DE)
(72) Erfinder: Zuber, Ralf, Dr., 63762 Grossostheim (DE); Bayer, Armin, 63579 Freigericht (DE); Kühnhold, Heike, 63486 Bruchköbel (DE); Stenke, Udo, 63814 Mainaschaff (DE)

(57) **Zusammenfassung**

Ein PEM-Brennstoffzellenstapel aus einer oder mehreren übereinander angeordneten Brennstoffzellen (1), die jeweils eine Membran-Elektrodeneinheit (2) zwischen zwei elektrisch leitfähige Bipolarplatten (3,4) enthalten, welche auf ihren Oberflächen mit einseitig offenen Strömungskanälen (10) für die Zuführung von Reaktivgasen ausgerüstet sind, wobei die Membran-Elektrodeneinheiten jeweils eine Polymerelektrolyt-Membran (5) aufweisen, die auf jeder Seite jeweils mit einer Reaktionsschicht (6,7) in Kontakt steht, wobei die Reaktionsschichten eine geringere flächige Ausdehnung als die Polymerelektrolyt-Membran besitzen und zwischen jeder Reaktionsschicht und den angrenzenden Bipolarplatten deckungsgleich zu den Reaktionsschichten jeweils eine kompressible, grobporige Gasverteilerschicht (8,9) aus Kohlefasergewebe sowie im Bereich außerhalb der durch die Gasverteilerschichten abgedeckten Fläche Dichtungen (11,12) eingefügt sind, wobei die Gasverteilerschichten im unbelasteten Zustand eine Dicke D₁ und die Dichtungen eine Dicke D₂ aufweisen. Der PEM-Brennstoffzellenstapel ist dadurch gekennzeichnet, daß die Gasverteilerschichten im PEM-Brennstoffzellenstapel auf 25 bis 60% ihrer ursprünglichen Dicke komprimiert sind.

## Beschreibung

Die Erfindung betrifft einen PEM-Brennstoffzellenstapel aus übereinander gestapelten Membran-Elektrodeneinheiten, Gasverteilerschichten und Bipolarplatten. Insbesondere betrifft die Erfindung solche PEM-Brennstoffzellenstapel, die Gasverteilerschichten aus gewebten Kohlefasern enthalten.

Brennstoffzellen wandeln einen Brennstoff und ein Oxidationsmittel örtlich voneinander getrennt an zwei Elektroden in Strom, Wärme und Wasser um. Als Brennstoff kann Wasserstoff oder ein wasserstoffreiches Gas, als Oxidationsmittel Sauerstoff oder Luft dienen. Der Vorgang der Energieumwandlung in der Brennstoffzelle zeichnet sich durch einen besonders hohen Wirkungsgrad aus. Aus diesem Grunde gewinnen Brennstoffzellen in Kombination mit Elektromotoren zunehmend Bedeutung als Alternative für herkömmliche Verbrennungskraftmaschinen.

Die sogenannte Polymerelektrolyt-Brennstoffzelle (PEM-Brennstoffzelle) eignet sich aufgrund ihrer kompakten Bauweise, ihrer Leistungsdichte sowie ihres hohen Wirkungsgrades für den Einsatz als Energiewandler in Elektroautomobilen.

Unter einem PEM-Brennstoffzellenstapel wird im Rahmen dieser Erfindung eine stapelweise Anordnung ("Stack") von Brennstoffzelleneinheiten verstanden. Eine Brennstoffzelleneinheit wird im folgenden auch kurz als Brennstoffzelle bezeichnet. Sie enthält jeweils eine Membran-Elektrodeneinheit (MEE), die zwischen bipolaren Platten, auch als Separatorplatten bezeichnet, zur Gaszufuhr und Stromleitung angeordnet ist. Eine Membran-Elektrodeneinheit besteht aus einer Polymerelektrolyt-Membran, die auf beiden Seiten mit Reaktionsschichten, den Elektroden, versehen ist. Eine der Reaktionsschichten ist als Anode für die Oxidation von Wasserstoff und die zweite Reaktionsschicht als Kathode für die Reduktion von Sauerstoff ausgebildet. Auf die Elektroden werden sogenannte Gasverteilerschichten aus Kohlefaserpapier oder Kohlefasergewebe aufgebracht, die einen guten Zugang der Reaktionsgase zu den Elektroden und eine gute Ableitung des Zellenstroms ermöglichen. Anode und Kathode enthalten sogenannte Elektrokatalysatoren, die die jeweilige Reaktion (Oxidation von Wasserstoff beziehungsweise Reduktion von Sauerstoff) katalytisch unterstützen. Als katalytisch aktive Komponenten werden bevorzugt die Metalle der Platingruppe des Periodensystems der Elemente eingesetzt. In der Mehrzahl werden sogenannte Trägerkatalysatoren verwendet, bei denen die katalytisch aktiven Platingruppenmetalle in hochdisperser Form auf die Oberfläche eines leitfähigen Trägermaterials aufgebracht wurden. Die mittlere Kristallitgröße der Platingruppenmetalle liegt dabei etwa zwischen 1 und 10 nm. Als Trägermaterialien haben sich feinteilige Ruße bewährt.

Die Polymerelektrolyt-Membran besteht aus Protonen leitenden Polymermaterialien. Diese Materialien werden im folgenden auch kurz als Ionomer bezeichnet. Bevorzugt wird ein Tetrafluorethylen-Fluorvinylether-Copolymer mit Säurefunktionen, insbesondere Sulfonsäuregruppen, verwendet. Ein solches Material wird zum Beispiel unter dem Handelsnamen Nafion® von E.I. DuPont vertrieben. Es sind jedoch auch andere, insbesondere fluorfreie Ionomermaterialien, wie sulfonierte Polyetherketone oder Arylketone oder Polybenzimidazole einsetzbar.

Für den breiten kommerziellen Einsatz von PEM-Brennstoffzellen in Kraftfahrzeugen ist eine weitere Verbesserung der elektrochemischen Zellenleistung sowie eine deutliche Verminderung der Systemkosten notwendig.

Eine wesentliche Voraussetzung für eine Steigerung der Zellenleistung ist eine optimale Zu- und Abfuhr der jeweiligen Reaktivgasmischungen zu und von den katalytisch aktiven Zentren der Katalysatorschichten. Neben der Zufuhr von Wasserstoff zur Anode muß das Ionomermaterial der Anode ständig durch Wasserdampf (Befeuchtungswasser) befeuchtet werden, um eine optimale Protonen-Leitfähigkeit zu gewährleisten. Das an der Kathode gebildete Wasser (Reaktionswasser) muß kontinuierlich abgeführt werden, um eine Flutung des Porensystems der Kathode und damit eine Behinderung der Versorgung mit Sauerstoff zu vermeiden.

Die US-PS 4,293,396 beschreibt eine Gasdiffusionselelektrode, die aus einem offenporigen leitfähigen Kohlefasergewebe besteht. Die Poren des Kohlefasergewebes enthalten eine homogene Mischung aus katalysierten Kohlenstoffpartikeln und hydrophoben Partikeln eines Bindermaterials.

Die deutsche Offenlegungsschrift DE 195 44 323 A1 stellt eine Gasdiffusionselektrode für Polymerelektrolyt-Brennstoffzellen vor, die ein Kohlefasergewebe enthält, das mit Ruß und Polytetrafluorethylen imprägniert ist.

In der EP 0 869 568 A1 wird eine Gasverteilerschicht aus einem Kohlefasergewebe für Membran-Elektrodeneinheiten beschrieben. Zur Verbesserung des elektrischen Kontaktes zwischen den Katalysatorschichten der Membran-Elektrodeneinheiten und dem Kohlefasergewebe der Gasverteilerschichten wird das Kohlefasergewebe auf der der jeweiligen Katalysatorschicht zugewandten Seite mit einer Ausgleichsschicht aus Ruß und einem Fluorpolymer beschichtet, die porös und wasserabstoßend und zugleich elektrisch leitend ist und außerdem eine einigermaßen glatte Oberfläche besitzt. Bevorzugt dringt diese Ausgleichsschicht nicht mehr als bis zur Hälfte in das Kohlefasergewebe ein. Das Kohlefasergewebe kann zur Verbesserung seiner wasserabstoßenden Eigenschaften mit einer Mischung aus Ruß und einem Fluorpolymer vorbehandelt werden.

In der WO 97/13287 wird eine Gasverteilerschicht (hier "intermediate layer") beschrieben, die durch Infiltrieren und/oder Beschichten einer Seite eines grobporigen Kohlenstoffsubstrates (Kohlepapier, Graphitpapier oder Kohlefilz) mit einer Zusammensetzung aus Ruß und einem Fluorpolymer erhältlich ist, die die Porosität eines oberflächennahen Teils des Kohlenstoffsubstrates vermindert und/oder eine diskrete Schicht verminderter Porosität auf der Oberfläche des Substrates bildet. Die Gasverteilerschicht wird mit dieser Beschichtung auf die Katalysatorschichten von Membran-Elektrodeneinheiten aufgelegt. Dabei ist es wie in der EP 0 869 568 A1 unter anderem Aufgabe der Beschichtung, einen guten elektrischen Kontakt zu den Katalysatorschichten herzustellen.

Die Beschichtung der Gasverteilerschichten entsprechend WO 97/13287, US 4,293,396, DE 195 44 323 A1 und der EP 0 869 568 mit einer Ruß/PTFE-Mischung ist aufwendig und erfordert eine abschließende Trocknung und Calcination bei 330 bis 400 °C.

Die US 6,007,933 beschreibt eine Brennstoffzelleneinheit aus übereinander gestapelten Membran-Elektrodeneinheiten und Bipolarplatten. Zwischen den Membran-Elektrodeneinheiten und den Bipolarplatten sind elastische Gasverteilerschichten angeordnet. Zur Versorgung der Membran-Elektrodeneinheiten mit Reaktivgasen weisen die Bipolarplatten auf ihren den Gasverteilerschichten zugewandten Kontaktflächen einseitig offene Gasverteilungskanäle auf. Die Brennstoffzelleneinheit wird zur Verbesserung des elektrischen Kontaktes zwischen den Gasverteilerschichten und den Membran-Elektrodeneinheiten unter Druck zusammengebaut. Dabei besteht die Gefahr, daß die elastischen Gasverteilerschichten in die einseitig offenen Gasverteilungskanäle eindringen und somit den Gastransport behindern und die elektrische Leistung der Brennstoffzelle beeinträchtigen. Dies wird zum Beispiel durch gelochte Trägerbleche verhindert, die zwischen Gasverteilerschichten und Bipolarplatten gelegt werden. Zur Abdichtung der Membran-Elektrodeneinheiten werden O-Ring Dichtungen und Dichtungen aus PTFE-Folien verwendet.

Es ist Aufgabe der vorliegenden Erfindung, einen Brennstoffzellenstapel anzugeben, welcher gegenüber dem Stand der Technik einen vereinfachten Aufbau bei gleicher oder besserer elektrischer Leistung aufweist.

Diese Aufgabe wird durch einen PEM-Brennstoffzellenstapel aus einer oder mehreren übereinander angeordneten Brennstoffzellen (1) gelöst, die jeweils eine Membran-Elektrodeneinheit (2) zwischen zwei elektrisch leitfähige Bipolarplatten (3,4) enthalten, welche auf ihren Oberflächen mit einseitig offenen Strömungskanälen (10) für die Zuführung von Reaktivgasen ausgerüstet sind, wobei die Membran-Elektrodeneinheiten jeweils eine Polymerelektrolyt-Membran (5) aufweisen, die auf jeder Seite jeweils mit einer Reaktionsschicht (6,7) in Kontakt steht, wobei die Reaktionsschichten eine geringere flächige Ausdehnung als die Polymerelektrolyt-Membran besitzen und zwischen jeder Reaktionsschicht und den angrenzenden Bipolarplatten deckungsgleich zu den Reaktionsschichten jeweils eine kompressible, grobporige Gasverteilerschicht (8,9) aus Kohlefasergewebe sowie im Bereich außerhalb der durch die Gasverteilerschichten abgedeckten Fläche Dichtungen (11,12) eingefügt sind, wobei die Gasverteilerschichten im unbelasteten Zustand eine Dicke D₁ und die Dichtungen eine Dicke D₂ aufweisen. Der PEM-Brennstoffzellenstapel ist dadurch gekennzeichnet, daß die Gasverteilerschichten im PEM-Brennstoffzellenstapel auf 25 bis 60% ihrer ursprünglichen Dicke komprimiert sind.

Erfindungsgemäß wird durch definierte Kompression der gewebten Gasverteilerschichten der Zellwiderstand (Widerstand einer einzelnen Membran-Elektrodeneinheit) verringert. Bevorzugt wird eine Kompression der Gasverteilerschichten auf 30 bis 50, insbesondere auf 35 bis 40 % ihrer ursprünglichen Dicke D₁ angestrebt. Erfahrungsgemäß kann der spezifische Widerstand des Kohlefasergewebes durch die Kompression auf unter 6 mΩ•cm herabgesetzt werden. Ebenso wird auch die Porosität der Gasverteilerschicht auf 20 bis 70% der ursprünglichen Porosität vermindert, so daß eine Flutung der Poren durch Reaktionswasser vermieden wird. Beide Effekte verbessern entscheidend die elektrische Leistung des Brennstoffzellenstapels.

Die definierte Kompression kann in einfacher Weise durch Verwendung von Dichtungen aus inkompressiblem Material eingestellt werden, deren Dicke D₂ kleiner als die Dicke D₁ der kompressiblen Gasverteilerschichten im unbelasteten Zustand ist. Beim Zusammenbau des Brennstoffzellenstapels werden die kompressiblen Gasverteilerschichten bis auf die Dicke der Dichtungen zusammengepreßt, so daß die Komprimierung des Brennstoffzellenstapels durch das Verhältnis D₂/D₁ gegeben ist. Als inkompressibel werden im Rahmen dieser Erfindung Materialien oder Materialverbunde bezeichnet, deren Kompressibilität weniger als 5, bevorzugt weniger als 1% der Kompressibilität der Gasverteilerschichten beträgt. Bevorzugt werden Dichtungen aus Polytetrafluorethylen (PTFE) eingesetzt, die durch Armierung mit Glasfasern der obigen Bedingung genügen.

Besonders vorteilhaft ist die Tatsache, daß durch die definierte Kompression der Gasverteilerschichten die sonst übliche Ausrüstung der Gasverteilerschichten mit einer elektrisch leitfähigen Ausgleichsschicht und die damit verbundenen aufwendigen Arbeitsschritte entfallen können. Darüber hinaus kann auch auf den Einsatz spezieller Trägerbleche, die ein Eindringen des Kohlefasergewebes der Gasverteilerschichten in die Strömungskanäle der Bipolarplatten verhindern sollen, verzichtet werden.

Die Strömungskanäle der Bipolarplatten sind mit Zu- und Abführungskanälen für die Reaktionsgase verbunden, die außerhalb der Fläche der Membran-Elektrodeneinheiten in einem peripheren Bereich der Bipolarplatten senkrecht durch den gesamten Plattenstapel geführt sind. Zwischen den Zu- und Abführungskanälen sind die Strömungskanäle auf den Kontaktflächen der Bipolarplatten in der Regel in Form von rechtwinkligen Mäandern oder Serpentinen angeordnet. Eine besonders vorteilhafte Ausführungsform des erfindungsgemäßen PEM-Brennstoffzellenstapels erhält man nun, wenn die Webrichtung des Kohlefasergewebes der Gasverteilerschichten unter einem Winkel α von 20 bis 70, bevorzugt von 30 bis 60, und insbesondere von 45°, zu den Strömungskanälen der Bipolarplatten verdreht wird, beziehungsweise wenn das Kohlefasergewebe in einer solchen Struktur gewebt ist, daß mindestens 60% der Fasern einen Winkel von mindestens 30° zur Kanalstruktur der Bipolarplatten aufweisen. In diesem Fall wird eine weitere Verbesserung der Transporteigenschaften und des Wasserhaushaltes der Gasverteilerschichten erhalten, da das Eindringen des Gewebes in die Gasverteilungskanäle und damit die Behinderung der Gasströmung in den Kanälen weiter verringert wird. Der selbe positive Effekt wird auch dann erhalten, wenn die Gasverteilungskanäle in einem geeigneten Muster auf den Bipolarplatten angeordnet werden.

Die erfindungsgemäßen PEM-Brennstoffzellenstapel weisen einen guten Zugang der Reaktivgase zu den katalytisch aktiven Zentren der Membran-Elektrodeneinheiten, eine effektive Befeuchtung des Ionomers in den Katalysatorschichten und der Membran und den problemlosen Abtransport des Reaktionsprodukts Wasser von der Kathodenseite der Membran-Elektrodeneinheiten auf.

Zur Herstellung der erfindungsgemäßen Gasverteilerschichten können kommerzielle, grobporige Kohlefasergewebe mit Porositäten von 50 bis 95 % verwendet werden. Hier gibt es verschiedene Grundmaterialien, die sich in Struktur, Herstellungsverfahren und Eigenschaften unterscheiden. Beispiele für solche Materialien sind AvCarb 1071 HCB von Textron Inc. oder Panex 30 von Zoltek, Inc.

Die kommerziellen, grobporigen Kohlefasergewebe können vor dem Einsatz mit hydrophobem Polymer imprägniert werden. Geeignete hydrophobe Polymere sind Polyethylen, Polypropylen, Polytetrafluorethylen oder andere organische oder anorganische, hydrophobe Materialien. Bevorzugt werden Suspensionen von Polytetrafluorethylen oder Polypropylen zur Imprägnierung eingesetzt. Die Beladung der Kohlefasersubstrate mit einem hydrophoben Polymer kann je nach Anwendungsfall zwischen 3 und 30 Gew.-% liegen. Besonders bewährt haben sich Beladungen zwischen 4 und 20 Gew.-%. Dabei kann die Beladung der Gasverteilerschichten von Anode und Kathode unterschiedlich sein. Die imprägnierten Kohlefasersubstrate werden unter starkem Luftaustausch bei Temperaturen bis 250 °C getrocknet. Besonders bevorzugt ist die Trocknung in einem Umlufttrockenschrank bei 60 bis 220, bevorzugt bei 80 bis140 °C. Anschließend erfolgt die Sinterung des hydrophoben Polymers. Dies erfolgt zum Beispiel bei PTFE bei einer Temperatur von 330 bis 400 °C.

Die folgenden Beispiele und Figuren verdeutlichen das Wesen der Erfindung. Es zeigen:
- **Figur 1:**: Querschnitt durch einen PEM-Brennstoffzellenstapel, welches eine Membran-Elektrodeneinheit enthält
- **Figur 2:**: Aufsicht auf eine Bipolarplatte mit aufgelegter Gasverteilerschicht und Dichtung
- **Figur 3:**: Aufsicht auf eine Bipolarplatte mit aufgelegter Gasverteilerschicht und Dichtung
- **Figur 4:**: Zellspannung in Abhängigkeit von der Stromdichte bei Reformat/Luftbetrieb für die MEE von Beispiel 1 und Vergleichsbeispiel 1.
- **Figur 5:**: Zellspannung in Abhängigkeit von der Stromdichte bei Reformat/Luftbetrieb für die MEE von Beispiel 1, Vergleichsbeispiel 2 und Vergleichsbeispiel 3.
- **Figur 6:**: Zellspannung in Abhängigkeit von der Stromdichte bei Reformat/Luftbetrieb für die MEE von Beispiel 1 und 2.

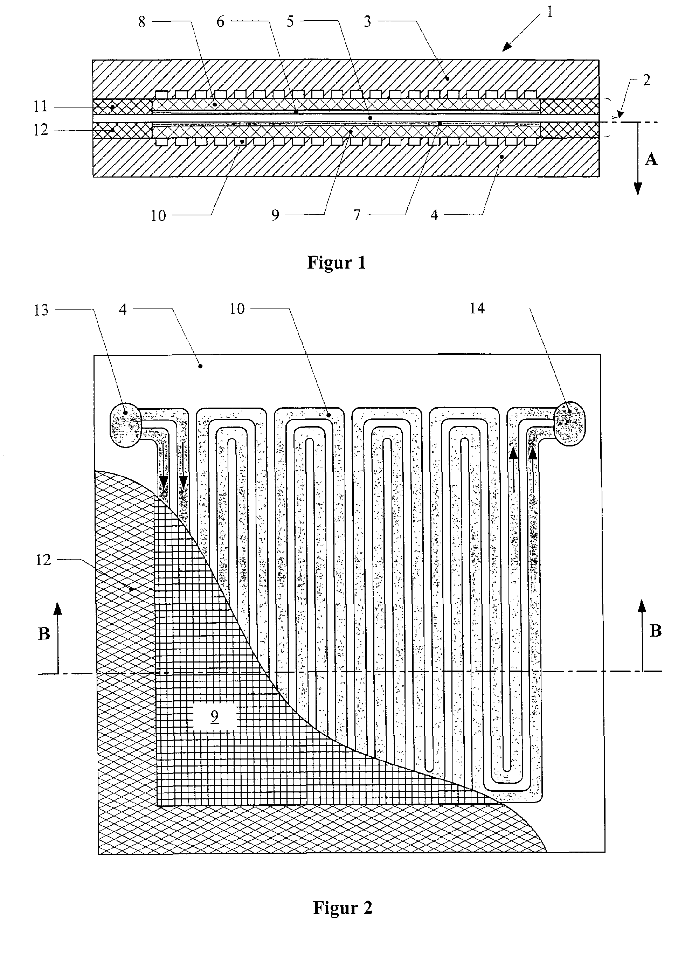

Figur 1 zeigt einen Querschnitt durch einen PEM-Brennstoffzellenstapel (1), welches der besseren Übersichtlichkeit wegen nur aus einer Membran-Elektrodeneinheit (2) besteht. (5) bezeichnet die Polymerelektrolyt-Membran, die auf beiden Seiten mit den Katalysatorschichten (6) und (7) in Kontakt steht. Die flächige Ausdehnung der Katalysatorschichten ist kleiner als die der Membran, so daß die Polymerelektrolyt-Membran nach allen Seiten über die Katalysatorschichten hinausragt und somit einen beschichtungsfreien Rand bildet. Paßgenau auf die Katalysatorschichten sind die Gasverteilerschichten (8) und (9) aufgelegt. Auf die Gasverteilerschichten sind von beiden Seiten die Bipolarplatten (3,4) mit den Gasverteilungskanälen (10) aufgelegt. Zur Abdichtung der Membran-Elektrodeneinheit aus Polymerelektrolyt-Membran, Katalysatorschichten und Gasverteilerschichten sind zwei gelochte Dichtungen (11 und 12) vorgesehen, deren Lochfläche der Ausdehnung der Katalysatorschichten angepaßt ist.

Als Dichtungen (11 und 12) werden bevorzugt inkompressible Polymerfolien oder Polymerkompositfolien wie zum Beispiel glasfaserverstärkte PTFE-Folien verwendet. Beim Zusammenbau des Brennstoffzellenstapels wird der gesamte Stapel durch Verschrauben in Richtung senkrecht zur Polymerelektrolyt-Membran zusammengepreßt. Die Dicke der Dichtungsfolien wird deshalb so gewählt, daß nach dem Zusammenbau die kompressiblen Gasverteilerschichten im geforderten Maße komprimiert vorliegen.

Figur 2 zeigt eine Aufsicht auf die Bipolarplatte (4) entsprechend Figur 1, Ansicht A, mit aufgelegter Gasverteilerschicht (9) und Dichtung (12). Gasverteilerschicht (9) und Dichtung (12) sind in der Aufsicht nur zum Teil gezeichnet und lassen den Blick frei auf die Kanalstruktur der Bipolarplatte. Die Gasverteilungskanäle (10) sind in einer doppelten Serpentinenstruktur angeordnet und verbinden den Zuflußkanal (13) mit dem Abflußkanal (14), die beide senkrecht durch den Zellenstapel führen. In Figur 2 deutet die Schraffur der Gasverteilerschicht (9) die übliche Orientierung der Gewebestruktur senkrecht und parallel relativ zu den Hauptausdehnungsrichtungen der Gasverteilungskanäle an. Der Querschnitt des PEM-Brennstoffzellenstapels gemäß Figur 1 entspricht dem Schnitt B-B von Figur 2.

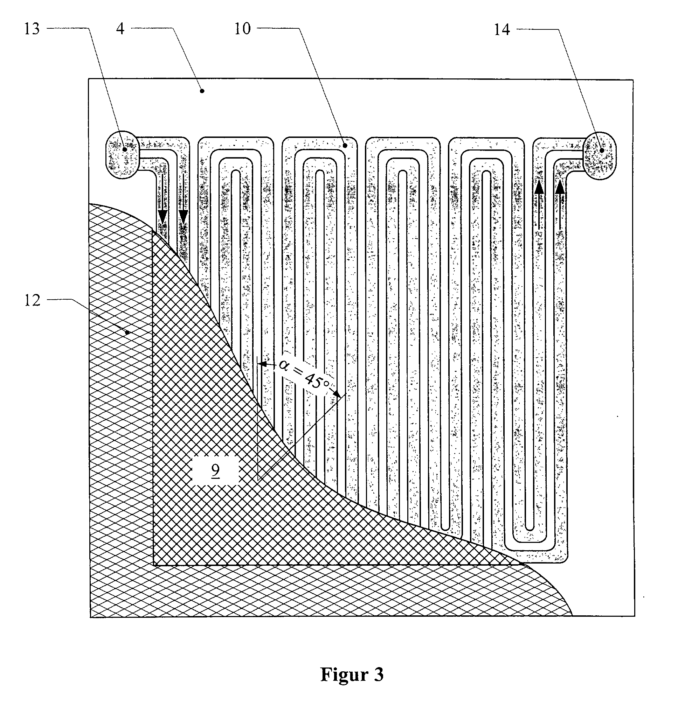

Figur 3 ist bis auf die Orientierung des Kohlefasergewebes der Gasverteilerschicht (9) identisch mit Figur 2. In Figur 3 ist das Kohlefasergewebe mit seiner Gewebestruktur entsprechend der bevorzugten Ausführungsform der Erfindung um den Winkel α = 45° gegen die Hauptausdehnungsrichtungen der Gasverteilungskanäle verdreht.

Die folgenden Beispiele und Vergleichsbeispiele sollen die Erfindung dem Fachmann weiter erläutern.

### Vergleichsbeispiel 1 (VB1):

Kohlefasergewebe vom Typ AvCarb 1071 HCB von Textron Inc. mit einem Flächengewicht von 115 g/m² und einer Dicke von 380 µm wurde in eine Suspension von PTFE in Wasser (Hostaflon TF5235, Dyneon GmbH) getaucht. Nach wenigen Sekunden wurde das Material herausgenommen. Nach dem Ablaufen der oberflächlich anhaftenden Suspension wurde das Kohlefasergewebe im Umluft-Trockenschrank bei 110 °C getrocknet. Zum Verschmelzen des in die Struktur eingebrachten PTFE wurde das imprägnierte Kohlefasergewebe in einem Kammerofen bei 340 bis 350 °C ca. 15 Minuten lang gesintert.

Durch Anpassen der PTFE-Konzentrationen in der Suspension wurden Kohlefasergewebe mit einem PTFE-Gehalt von 14,5 ± 0,5 Gew.-% für die Anode und 6,5 ± 0,5 Gew.-% für die Kathode einer Brennstoffzelle hergestellt.

Anschließend wurden diese Kohlefasergewebe mit einer Paste aus Ruß Vulcan XC-72 und PTFE beschichtet, getrocknet und wiederum calciniert. Das Verhältnis der Gewichtsanteile von Ruß und PTFE war 7 : 3. Die Auftragsstärke der getrockneten und calcinierten Paste betrug 4,1 ± 0,2 mg/cm².

Die mittlere Dicke der fertigen Kohlefasergewebe betrug 330 µm.

Diese Anoden- und Kathoden-Gasverteilerschichten wurden zusammen mit einer Membran-Elektrodeneinheit, in eine Brennstoffzellen-Prüfzelle mit doppelter Serpentinenstruktur eingebaut. Dabei wurde das Gewebe so ausgerichtet, daß das Kreuzgewebe parallel (α = 0°), bzw. in einem Winkel α von 90° (Querfäden), zur Richtung der Gasverteilungskanäle angeordnet war. Beim Zusammenbau der Prüfzelle wurden die Bipolarplatten so stark miteinander verschraubt, daß die Gasverteilerschichten inklusive der jeweiligen Katalysatorschicht auf die Dicke der Dichtungen zusammengepreßt wurden.

Als Dichtungen wurden zwei Chemglas-Dichtungen (inkompressibles, glasfaserverstärktes PTFE, 0,14 mm dick) mit einer Gesamtdicke von 0,28 mm verwendet (s. Figur 1). Zusammen mit einer Dicke der Katalysatorschicht von jeweils 20 µm errechnet sich daraus eine Komprimierung der Gasverteilerschichten auf 36,4% der ursprünglichen Dicke.

Die hier verwendete katalysatorbeschichtete Membran wurde auf folgende Weise angefertigt:

Die Polymerelektrolyt-Membran und das Ionomer für die Reaktionsschichten wurden jeweils in ihrer nicht-azidischen Form eingesetzt und nach Abschluss des Herstellungsprozesses wieder mit Hilfe von Schwefelsäure in ihre azidische, Protonen leitende Modifikation überführt.

Zur Herstellung der Reaktionsschichten wurden folgende Tinten, beziehungsweise Pasten, verwendet:

| | | | |
|---|---|---|---|
| **Tinte A:** | Katalysator | 40 % Pt auf Ruß Vulcan® XC-72 | 5,53 g |
| | Nafion-Lösung | 4,2 Gew.-% in Propylenglykol | 43,92 g |
| | Natronlauge | 15 Gew.-% in Wasser | 0,59 g |
| | | | |
| **Tinte B:** | Katalysator: | 40 % PtRu (1:1) auf Ruß Vulcan® XC-72 | 5,45 g |
| | Nafion-Lösung | 4,2 Gew.-% in Propylenglykol | 43,13 g |
| | Natronlauge | 15 Gew.-% in Wasser | 0,59 g |

Die jeweiligen Bestandteile der obigen Rezepturen wurden miteinander vermischt und anschließend mit einem Dreiwalzwerk sorgfältig homogenisiert.

Zur Bildung der Kathodenschicht wurde die Tinte A im Siebdruckverfahren auf eine Nafion® 112 - Membran (Dicke 50 µm) in der Na⁺-Form aufgedruckt und bei 90 °C getrocknet. Anschließend wurde die Rückseite der Membran zur Bildung der Anodenschicht auf die gleiche Weise mit der Katalysatortinte B beschichtet. Die Rück-Protonierung erfolgte in 0,5 M Schwefelsäure. Die Platinbeladung der Kathodenschicht betrug 0,4 mg Pt/cm², die der Anodenschicht 0,3 mg Pt/cm². Das entsprach einer Gesamtbeladung der beschichteten Membran mit Platin von 0,7 mg/cm². Die Schichtdikken lagen im Bereich zwischen 15 und 20 µm. Die bedruckte Fläche betrug jeweils 50 cm².

### Beispiel 1:

Kohlefasergewebe vom Typ AvCarb 1071 HCB von Textron Inc. mit einem Flächengewicht von 115 g/m² und einer Dicke von 380 µm wurde in eine Suspension von PTFE in Wasser (Hostaflon TF5235, Dyneon GmbH) getaucht. Nach wenigen Sekunden wurde das Material herausgenommen. Nach dem Ablaufen der oberflächlich anhaftenden Suspension wurde das Kohlefasergewebe im Umluft-Trockenschrank bei 110 °C getrocknet. Zum Verschmelzen des in die Struktur eingebrachten PTFE wurde das imprägnierte Kohlefasergewebe in einem Kammerofen bei 340 bis 350 °C ca. 15 Minuten lang gesintert.

Durch Anpassen der PTFE-Konzentrationen in der Suspension wurden Kohlefaserpapiere mit einem PTFE-Gehalt von 14,5 ± 0,5 Gew.-% für die Anode und 6,5 ± 0,5 Gew.-% für die Kathode einer Brennstoffzelle hergestellt.

Die mittlere Dicke der fertigen Kohlefasergewebe betrug 330 µm.

Diese Anoden- und Kathoden-Gasverteilerschichten wurden zusammen mit einer katalysatorbeschichteten Membran entsprechend Vergleichsbeispiel 1, in eine Brennstoffzellen-Prüfzelle mit doppelter Serpentinenstruktur eingebaut. Dabei wurde das Gewebe so ausgerichtet, daß das Kreuzgewebe parallel (α = 0°), bzw. in einem Winkel α von 90° (Querfäden), zur Richtung der Gasverteilungskanäle angeordnet war. Beim Zusammenbau der Prüfzelle wurden die Bipolarplatten so stark miteinander verschraubt, daß die Gasverteilerschichten inklusive der jeweiligen Katalysatorschicht auf die Dicke der Dichtungen zusammengepreßt wurden.

Als Dichtungen wurden zwei Chemglas-Dichtungen (inkompressibles, glasfaserverstärktes PTFE, 0,14 mm dick) mit einer Gesamtdicke von 0,28 mm verwendet (s. Figur 1). Zusammen mit einer Dicke der Katalysatorschicht von jeweils 20 µm errechnet sich daraus eine Komprimierung der Gasverteilerschichten auf 36,4% der ursprünglichen Dicke.

### Vergleichsbeispiel 2:

Die Kohlefasergewebe wurden wie in Beispiel 1 beschrieben hydrophobiert und gesintert. Der PTFE-Gehalt betrug 14,5 ± 0,5 Gew.-% für die Anode und 6,5 ± 0,5 Gew.-% für die Kathode.

Diese Anoden- und Kathoden-Gasverteilerschichten wurden zusammen mit einer katalysatorbeschichteten Membran entsprechend Vergleichsbeispiel 1, in eine Brennstoffzellen-Prüfzelle mit doppelter Serpentinenstruktur eingebaut. Dabei wurde das Gewebe so ausgerichtet, daß das Kreuzgewebe parallel (α = 0°), bzw. in einem Winkel α von 90° (Querfäden), zur Richtung der Gasverteilungskanäle angeordnet war. Beim Zusammenbau der Prüfzelle wurden die Bipolarplatten so stark miteinander verschraubt, daß die Gasverteilerschichten inklusive der jeweiligen Katalysatorschicht auf die Dicke der Dichtungen zusammengepreßt wurden.

Als Dichtungen wurden zwei Chemglas-Dichtungen (inkompressibles, glasfaserverstärktes PTFE, 0,08 mm dick) mit einer Gesamtdicke von 0,16 mm verwendet. Zusammen mit einer Dicke der Katalysatorschicht von jeweils 20 µm errechnet sich daraus eine Komprimierung der Gasverteilerschichten auf 18,2% der ursprünglichen Dicke.

### Vergleichsbeispiel 3:

Die Kohlefasergewebe wurden wie in Beispiel 1 beschrieben hydrophobiert und gesintert. Der PTFE-Gehalt betrug 14,5 ± 0,5 Gew.-% für die Anode und 6,5 ± 0,5 Gew.-% für die Kathode.

Diese Anoden- und Kathoden-Gasverteilerschichten wurden zusammen mit einer katalysatorbeschichteten Membran entsprechend Vergleichsbeispiel 1, in eine Brennstoffzellen-Prüfzelle mit doppelter Serpentinenstruktur eingebaut. Dabei wurde das Gewebe so ausgerichtet, daß das Kreuzgewebe parallel (α = 0°), bzw. in einem Winkel α von 90° (Querfäden), zur Richtung der Gasverteilungskanäle angeordnet war. Beim Zusammenbau der Prüfzelle wurden die Bipolarplatten so stark miteinander verschraubt, daß die Gasverteilerschichten inklusive der jeweiligen Katalysatorschicht auf die Dicke der Dichtungen zusammengepreßt wurden.

Als Dichtungen wurden zwei Chemglas-Dichtungen (inkompressibles, glasfaserverstärktes PTFE, 0,27 mm dick) mit einer Gesamtdicke von 0,54 mm verwendet. Zusammen mit einer Dicke der Katalysatorschicht von jeweils 20 µm errechnet sich daraus eine Komprimierung der Gasverteilerschichten auf 75,8% der ursprünglichen Dicke.

### Beispiel 2:

Die Kohlefasergewebe wurden wie in Beispiel 1 beschrieben hydrophobiert und gesintert. Der PTFE-Gehalt betrug 14,5 ± 0,5 Gew.-% für die Anode und 6,5 ± 0,5 Gew.-% für die Kathode.

Diese Anoden- und Kathoden-Gasverteilerschichten wurden zusammen mit einer katalysatorbeschichteten Membran entsprechend Vergleichsbeispiel 1, in eine Brennstoffzellen-Prüfzelle mit doppelter Serpentinenstruktur eingebaut. Dabei wurde das Gewebe so ausgerichtet, daß das Kreuzgewebe in einem Winkel α von 45°, zur Richtung der Gasverteilungskanäle angeordnet war. Beim Zusammenbau der Prüfzelle wurden die Bipolarplatten so stark miteinander verschraubt, daß die Gasverteilerschichten inklusive der jeweiligen Katalysatorschicht auf die Dicke der Dichtungen zusammengepreßt wurden.

Als Dichtungen wurden zwei Chemglas-Dichtungen (inkompressibles, glasfaserverstärktes PTFE, 0,14 mm dick) mit einer Gesamtdicke von 0,28 mm verwendet. Zusammen mit einer Dicke der Katalysatorschicht von jeweils 20 µm errechnet sich daraus eine Komprimierung der Gasverteilerschichten auf 36,4% der ursprünglichen Dicke.

### Elektrochemische Prüfungen

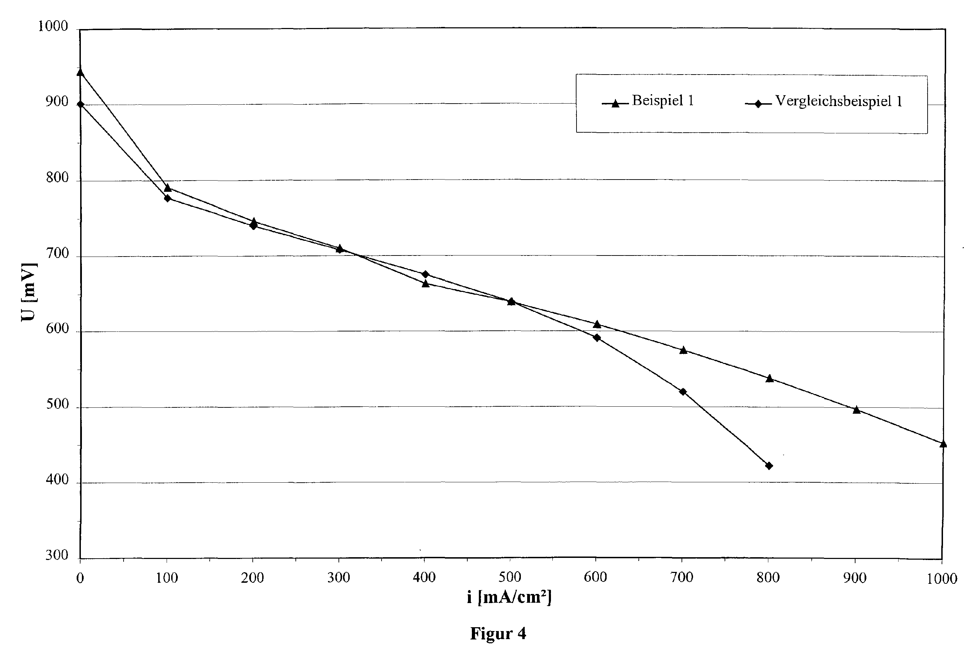

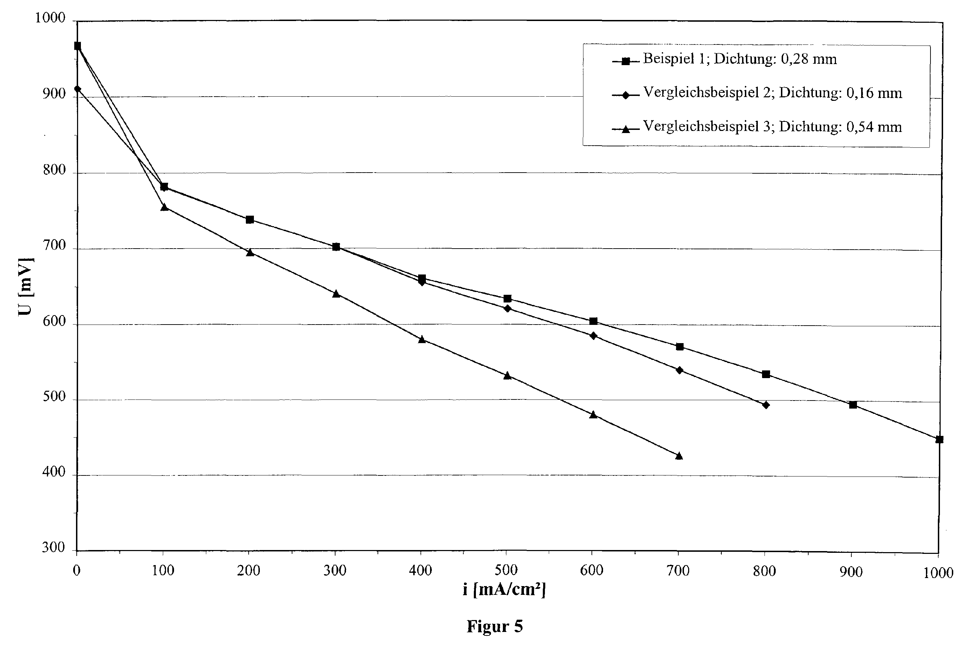

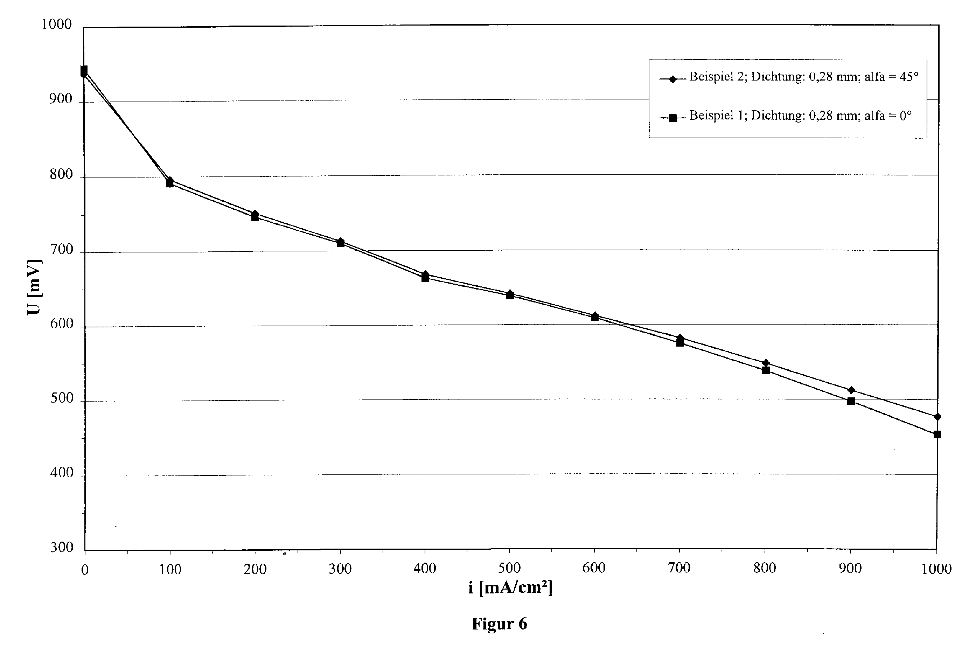

Die gemessenen Spannungen der Zellen gemäß den Vergleichsbeispielen 1,2 und 3 und den Beispielen 1 und 2 im Reformat/Luftbetrieb in Abhängigkeit von der Stromdichte sind beispielhaft in Figur 4 für die Zellen von Vergleichsbeispiel 1 und Beispiel 1 und in Figur 5 für die Zellen von Beispiel 1, Vergleichsbeispiel 2 und Vergleichsbeispiel 3 dargestellt. Figur 6 zeigt den Vergleich der Leistungsdaten der Zellen nach Beispiel 1 und 2. Die Zelltemperatur betrug 75°C. Der Arbeitsdruck der Reaktivgase war 1 bar. Der Wasserstoffgehalt des Reformats war 45 Vol.-%. Die CO-Konzentration betrug 50 ppm. Zur Erhöhung der Brennstoffzellenleistung wurde dem Anodengas 3 Vol.-% Luft zugesetzt. Man erkennt, daß die erfindungsgemäßen Brennstoffzellenstapel mit den erfindungsgemäßen Gasverteilerschichten eine deutlich verbesserte elektrische Leistung im Vergleich zum Stand der Technik (VB1) liefern.

Tabelle 1 zeigt die bei einer Belastung der Zellen mit einer Stromdichte von 600 mA/cm² noch gemessenen Zellspannungen.

**Tabelle 1:**

| Zellspannungen im Reformat/Luftbetrieb bei 600 mA/cm² | |
|---|---|
| Beispiel | Zellspannung [mV] |
| Vergleichsbeispiel 1 | 599 |
| Beispiel 1 | 609 |
| Vergleichsbeispiel 2 | 585 |
| Vergleichsbeispiel 3 | 480 |
| Beispiel 2 | 612 |

Die Beispiele 1 und 2 zeigen eine verbesserte Leistung im Vergleich mit den Vergleichsbeispielen 2 und 3. Auch gegenüber den mit einer Ruß/PTFE - Ausgleichsschicht versehenen Gasverteilerschichten aus Vergleichsbeispiel 1 besteht ein geringer Leistungsvorteil bei niedrigen und hohen Stromdichten. Der Hauptvorteil hierbei ist jedoch, daß die aufwendige Herstellung der Ruß/PTFE - Ausgleichsschicht entfällt.

## Patentansprüche

1. PEM-Brennstoffzellenstapel aus einer oder mehreren übereinander angeordneten Brennstoffzellen (1), die jeweils eine Membran-Elektrodeneinheit (2) zwischen zwei elektrisch leitfähige Bipolarplatten (3,4) enthalten, welche auf ihren Oberflächen mit einseitig offenen Strömungskanälen (10) für die Zuführung von Reaktivgasen ausgerüstet sind, wobei die Membran-Elektrodeneinheiten jeweils eine Polymerelektrolyt-Membran (5) aufweisen, die auf jeder Seite jeweils mit einer Reaktionsschicht (6,7) in Kontakt steht, wobei die Reaktionsschichten eine geringere flächige Ausdehnung als die Polymerelektrolyt-Membran besitzen und zwischen jeder Reaktionsschicht und den angrenzenden Bipolarplatten deckungsgleich zu den Reaktionsschichten jeweils eine kompressible, grobporige Gasverteilerschicht (8,9) aus Kohlefasergewebe sowie im Bereich außerhalb der durch die Gasverteilerschichten abgedeckten Fläche Dichtungen (11,12) eingefügt sind, wobei die Gasverteilerschichten im unbelasteten Zustand eine Dicke D₁ und die Dichtungen eine Dicke D₂ aufweisen,
**dadurch gekennzeichnet,**
**daß** die Gasverteilerschichten im PEM-Brennstoffzellenstapel auf 25 bis 60% ihrer ursprünglichen Dicke komprimiert sind.

2. PEM-Brennstoffzellenstapel nach Anspruch 1,
**dadurch gekennzeichnet,**
**daß** die Dichtungen (9) aus inkompressiblem Material bestehen und die Komprimierung des Brennstoffzellenstapels durch das Verhältnis D₂/D₁ gegeben ist.

3. PEM-Brennstoffzellenstapel nach Anspruch 1,
**dadurch gekennzeichnet,**
**daß** das die Porosität der eingesetzten Gasverteilerschichten durch Kompression auf 20 bis 70% und ihr elektrischer Widerstand auf unter 6 mΩ · cm vermindert wird.

4. PEM-Brennstoffzellenstapel nach einem der Ansprüche 1 bis 3,
**dadurch gekennzeichnet,**
**daß** die Geweberichtung des Kohlefasergewebes unter einem Winkel von 20 bis 70° zu den Strömungskanälen der Bipolarplatten angeordnet ist.

5. PEM-Brennstoffzellenstapel nach einem der Ansprüche 1 bis 3,
**dadurch gekennzeichnet,**
**daß** die Geweberichtung des Kohlefasergewebes unter einem Winkel von 30 bis 60° zu den Strömungskanälen der Bipolarplatten angeordnet ist.

6. PEM-Brennstoffzellenstapel nach einem der Ansprüche 1 bis 3,
**dadurch gekennzeichnet,**
**daß** das Kohlefasergewebe in einer solchen Struktur gewebt ist, daß mindestens 60% der Fasern einen Winkel von mindestens 30° zur Kanalstruktur der Bipolarplatten aufweisen.

7. Elektroautomobil enthaltend ein PEM-Brennstoffzellenstapel zur elektrischen Energieversorgung,
**dadurch gekennzeichnet,**
**daß** ein PEM-Brennstoffzellenstapel nach einem der Ansprüche 1 bis 6 eingesetzt wird.
